# EUROPÄISCHE PATENTSCHRIFT

(11) **EP 0 364 851 B1**
(45) Veröffentlichungstag und Bekanntmachung des Hinweises auf die Patenterteilung: **18.08.1993**
(21) Anmeldenummer: 89118722.1
(22) Anmeldetag: 09.10.1989
(51) Int. Cl.: F16F 9/36, F16J 15/16, F16F 9/38

(54) **Abschlussanordnung am Behälterrohr eines Behälterrohr-Kolbenstangengeräts**
Sealing arrangement for the reservoir tube of a device consisting of a reservoir tube and a piston rod
Dispositif d'étanchéité pour réservoir tubulaire d'un dispositif à réservoir tubulaire et tige de piston

(30) Priorität: 10.10.1988 DE 3834432
(43) Veröffentlichungstag der Anmeldung: 25.04.1990
(73) Patentinhaber: Stabilus GmbH, D-56070 Koblenz (DE)
(72) Erfinder: Freitag, Herbert, D-5400 Koblenz (DE); Fuhrmann, Castor, D-5441 Brachtendorf (DE)
(74) Vertreter: Weickmann, Heinrich, Dipl.-Ing.

(56) Entgegenhaltungen:
- EP-A- 0 032 988
- DE-C- 3 300 771
- DE-U- 7 705 770
- DE-U- 7 920 645
- GB-A- 2 000 251

## Beschreibung

Die Erfindung betrifft eine Abschlußanordnung am Behälterrohr eines Behälterrohr-Kolbenstangengeräts, insbesondere einer pneumatischen Feder, bestehend aus einem Behälterrohr, in dem sich ein gegebenenfalls unter Druck stehendes Medium befindet, und einer in das Behälterrohr ein- und ausfahrenden Kolbenstange, die in einer Kolbenstangenführung geführt und gegebenenfalls mit einer Kolbenstangendichtung nach außen hin abgedichtet ist, wobei die Kolbenstangenführung mit einer Umbördelung des Behälterrohres in ihrer Lage gehalten ist und die Umbördelung von einer Schutzkappe überdeckt ist.

Bei den derzeit am Markt befindlichen Gasfedern, wie sie beispielsweise in dem DE-U-79 20 645 beschrieben ist, ist es üblich, die Druckrohre durch Umbördeln zu verschliessen. Dabei besteht jedoch das Problem, daß bei den heutigen Lackschutzmaßnahmen und Verfahren die Lackierung in dem Bereich zwischen der umgebördelten Planfläche bis zur Anlage der Kolbenstangenführung kein ausreichender Korrosionsschutz gewährleistet ist.

Aus der GB-A-2 000 251 gemäß Oberbegriff des Anspruchs 1 ist ein Stoßdämpfer bekannt, bei welcher das kolbenstangenseitige Ende des Zylinders radial einwärts gekröpft ist und durch diese Kröpfung die Kolbenstangenführung gegen Axialverschiebung aus dem Zylinder heraus sichert. Dabei ist auf das kolbenstangenseitige Ende des Zylinders eine Kappe aufgesetzt, die mit ihrem Mantel an der Außenseite des Zylinders anliegt und mit ihrer Stirnwand auf dem gekröpften Ende des Zylinders aufliegt. Die Kappe ist dabei als Lager für eine Anschlagplatte ausgebildet, die mit einem an der Kolbenstange befestigten Puffer dann zusammenwirkt, wenn sich die Kolbenstange ihrer innersten Stellung innerhalb des Zylinders nähert. Von einem Korrosionsschutz des zur axialen Sicherung der Kolbenstangenführung gekröpften Teils des Zylinders ist hierbei nicht die Rede. Der an der Außenseite des Zylinders anhaftende Mantel der Kappe kann sich als sehr unzweckmäßig erweisen, insbesondere bei Gasfedern, bei denen wegen der Berührungsmöglichkeit mit einer Bedienungsperson die Gefahr einer verletzenden oder schmerzerzeugenden Berührung besteht.

Der Erfindung liegt die Aufgabe zugrunde, die Verschlußtechnik von Behälterrohren gattungsgemäßer Art, insbesondere bei Gasfedern, hinsichtlich des Korrosionsschutzes zu verbessern, metallische Kanten nach Möglichkeit zu vermeiden oder abzurunden und die optische Formgestaltung des Druckrohrabschlusses zu verbessern.

Diese Aufgabe wird dadurch gelöst, daß die Kolbenstangenführung an ihrem austrittseitigen Ende mit einer radialen Hinterschneidung versehen ist, in der die Schutzkappe festgelegt ist und/oder daß ein Ringfortsatz der Schutzkappe durch eine Montagehülse radial auswärts gegen eine Innenumfangsfläche eines am austrittseitigen Ende der Kolbenstangenführung ausgebildeten Absatzes verpreßt ist.

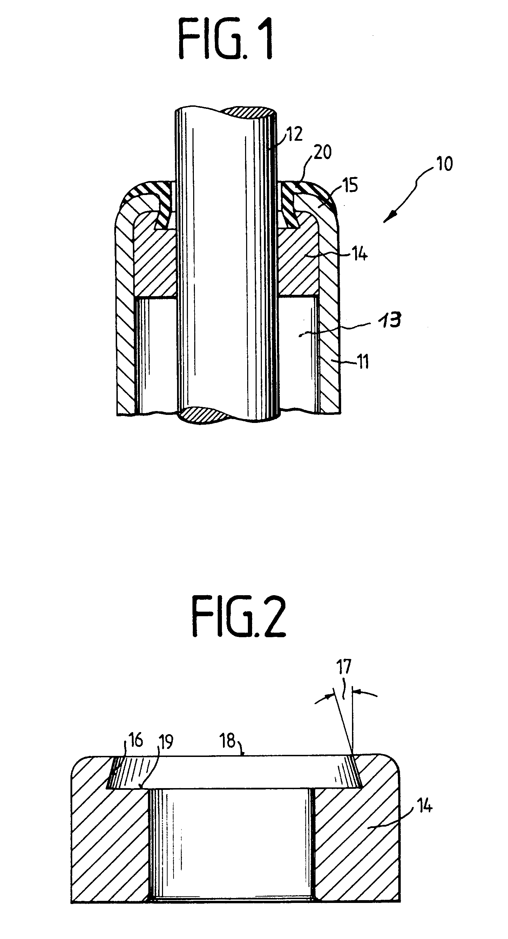

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- Fig. 1: die schematische Darstellung der Abschlußanordnung einer Gasfeder mit Behälterrohr, Kolbenstangenführung und Kolbenstange und mit einer die Umbördelung überdeckenden Schutzkappe;
- Fig. 2: die Detaildarstellung einer Kolbenstangenführung nach der Fig. 1, geschnitten;
- Fig. 3: die Detaildarstellung einer Schutzkappe für die Umbördelung des Behälterrohres einer Gasfeder nach der Fig. 1, mit einem Befestigungsbund und pilzförmiger Abdecklippe;
- Fig. 4: die Detaildarstellung einer Schutzkappe nach der Fig. 3 mit einem zusätzlichen, einstückig angeformten Montagering;
- Fig. 5: die Detaildarstellung einer Schutzkappe nach der Fig. 3 mit zusätzlicher radialer Dichtlippe;
Die in der Fig. 1 dargestellte Gasfeder 10 besteht im wesentlichen aus einem Behälterrohr 11 mit einem Druckgasraum 13 und einer in das Behälterrohr 11 ein- und ausfahrbaren Kolbenstange 12. Die Kolbenstange 12 ist in einer Kolbenstangenführung 14 geführt. Die Kolbenstangenführung 14 ist auf der dem Druckgasraum 13 abgewandten Niederdruckseite mit einer Umbördelung 15 des Behälterrohres 11 in ihrer Lage gehalten. Über die Umbördelung 15 ist eine Schutzkappe 20 gestülpt.

Wie die Fig. 2 zeigt, weist die Kolbenstangenführung 14 auf der dem Druckgasraum 13 abgewandten Niederdruckseite eine radial nach außen laufende axiale Hinterschneidung 16 auf, die mit einem Hinterschneidungswinkel 17 versehen ist. Der Hinterschneidungswinkel 17 beträgt etwa 15 bis 25 Grad. Axial innen geht die rundumlaufende Hinterschneidung 16 in eine radial verlaufende Anschlagfläche 19 über. Der axial äußere Durchmesser 18 der Hinterschneidung 16 ist um einen vorbestimmten Betrag größer als der Außendurchmesser der Kolbenstange 12.

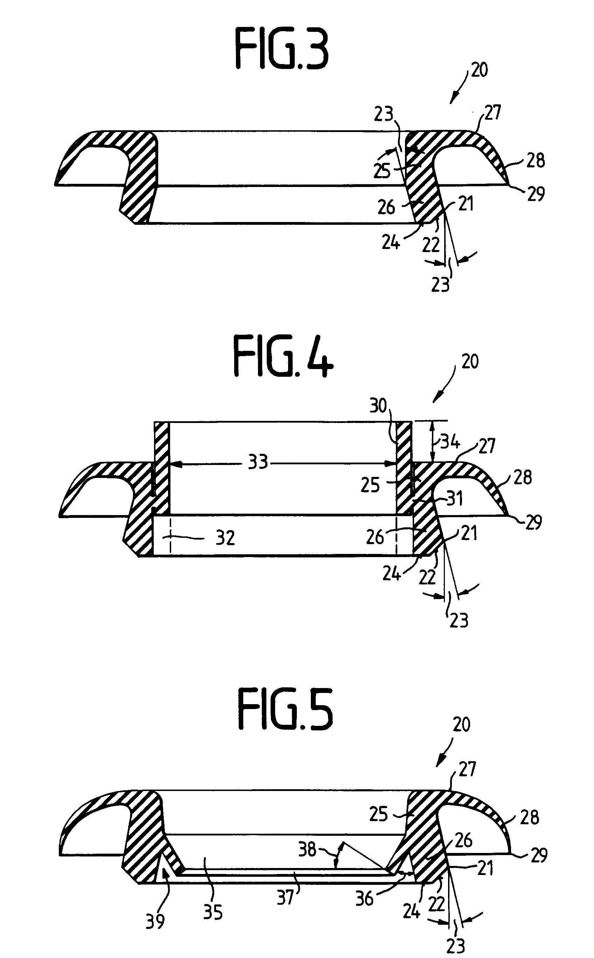

Die in der Fig. 3 dargestellte Schutzkappe 20 besteht im wesentlichen aus einem axial verlaufenden zylindrischen Sitzring 25 und einer einstückig angeformten, axial außen, im wesentlichen radial verlaufenden Abdeckkappe 27. Der zylindrische Sitzring 25 geht axial innen einstückig in einen Schnappring 26 über, der um einen Hinterschneidungswinkel 23 nach radial außen abgewinkelt ist. Der abgewinkelte Schnappring 26 weist an seinem, der Abdeckkappe 27 entgegengesetzten Ende eine radial verlaufende Sitzfläche 24 auf, die in Einbaulage an der Anschlagfläche 19 der Kolbenstangenführung 14 zur Anlage bringbar ist. Der vorbestimmte Betrag, um den Durchmesser 18 der Hinterschneidung 16 gößer als der Außendurchmesser der Kolbenstange 12 ist, entspricht dabei etwa der doppelten Wandstärke des Sitzringes 25.

Radial außen geht die Sitzfläche 24 in eine Montageschräge 22 über. Die Montageschräge 22 weist einen Winkel von etwa 30 bis 45 Grad auf. Am radial äußeren Umfang des abgewinkelten Schnapprings 26 ist ein Befestigungsbund 21 vorgesehen, der mit einem Hinterschneidungswinkel 23 aus der axial verlaufenden Längsrichtung abgewinkelt ist. Der Hinterschneidungswinkel 23 beträgt ebenfalls 15 bis 25 Grad. Der Befestigungsbund 21 stellt die radial äußerste Erstreckung des abgewinkelten Schnappringes 26 dar. In Einbaulage korrespondiert der Befestigungsbund 21 mit der Hinterschneidung 16 der Kolbenstangenführung 14.

Die an den zylindrischen Sitzring 25 der Schutzkappe 20 einstückig angeformte Abdeckkappe 27 geht radial außen in eine pilzförmig ausgebildete Abdecklippe 28 über. Die Abdecklippe 28 ist mit der Umbördelung 15 des Behälterrohres 11 korrespondierend ausgebildet und geht einstückig in eine radial äußere Dichtlippe 29 über. In Einbaulage schmiegt sich die Dichtlippe 29 dichtend an die Außenkontur der Umbördelung 15 an. Dadurch entsteht ein optisch verbesserter Abschluß des Behälterrohres 11, der abgerundet und kantenfrei die Einbaunormen für abgerundete Bauteile in Fahrgasträumen erfüllt.

Bei der in der Fig. 4 dargestellten Ausführungsform ist an den zylindrischen Sitzring 25 der Schutzkappe 20 eine Montagehülse 30 radial innen über eine Sollbruchstelle 31 einstückig angeformt. Die Montagehülse 30 steht in ihrer dargestellten Vor-Montagepositon mit einem vorbestimmten Überstand 34 axial über die Abdeckkappe 27 über. In Montageposition liegt zwischen der Kolbenstange 12 und dem Schnappring 26 ein Ringraum 32 frei, in den die Montagehülse zum eigentlichen Festsetzen der Schutzkappe 20 in der Kolbenstangenführung 14 eingepreßt werden kann. Dabei schert die Montagehülse 30 an der Sollbruchstelle 31 ab und verpreßt den Schnappring 26 radial nach außen. Diese Version kann beispielsweise bei Bauteilen ohne eine Hinterschneidung im Bereich der Kolbenstangenführung 14 in einen zylindrischen Absatz mit Vorspannung eingepreßt werden. Der Innendurchmesser 33 der Montagehülse 30 ist dabei etwas größer als der Außendurchmesser der Kolbenstange 12. Die Kolbenstange 12 ist so frei in der Montagehülse 30 axial beweglich.

Bei der in der Fig. 5 dargestellten Ausführungsform der Schutzkappe 20 ist an dem Sitzring 25 radial innen eine zusätzliche Dichtlippe 35 einstückig angeformt. Die zusätzliche Dichtlippe 35 steht in einem vorbestimmten Abspreizwinkel 36 aus der axialen Längsrichtung und ist gegen die Hochdruckseite gerichtet. Ihr axial nach innen weisendes freies Ende 37 ist angeschrägt, wobei der Anschrägwinkel 38 ca. 25 bis 45 Grad beträgt. Eine derartige Dichtlippe 35 streift bevorzugt austretendes Medium, beispielsweise Dämpf-und/oder Schmieröl bei der Ausschubbewegung der Kolbenstange 12 ab.

Zwischen der Dichtlippe 35 und dem Schnappring 26 entsteht durch den Abspreizwinkel 36 eine Schmiertasche 39, so daß die - nicht dargestellte - Hauptdichtung hinsichtlich ihrer Lebensdauer und ihrer Funktionswerte positiv unterstützt wird. Neben dem Abstreifen von Öl bei der Ausschubbewegung wird die Verschmutzung von der Kolbenstange 12 abgestreift und von der axial innen nachgeordneten Hauptdichtung ferngehalten.

## Patentansprüche

1. Abschlußanordnung am Behälterrohr (11) eines Behälterrohr-Kolbenstangengeräts, insbesondere einer pneumatischen Feder, bestehend aus einem Behälterrohr (11), in dem sich ein gegebenenfalls unter Druck stehendes Medium befindet, und einer in das Behälterrohr (11) ein- und ausfahrenden Kolbenstange (12), die in einer Kolbenstangenführung (14) geführt und gegebenenfalls mit einer Kolbenstangendichtung (35) nach außen hin abgedichtet ist, wobei die Kolbenstangenführung (14) mit einer Umbördelung (15) des Behälterrohres (11) in ihrer Lage gehalten ist und die Umbördelung (15) von einer Schutzkappe (20) überdeckt ist, dadurch gekennzeichnet, daß die Kolbenstangenführung (14) an ihrem austrittsseitigen Ende mit einer radialen Hinterschneidung (16) versehen ist, in der die Schutzkappe (20) festgelegt ist. und/oder daß ein Ringfortsatz (26) der Schutzkappe (20) durch eine Montagehülse (30) radial auswärts gegen eine Innenumfangsfläche (16) eines am austrittsseitigen Ende der Kolbenstangenführung (14) ausgebildeten Absatzes verpreßt ist.

2. Abschlußanordnung nach Anspruch 1, dadurch gekennzeichnet, daß die Schutzkappe (20) mit einem axial verlaufenden, zylindrischen Sitzring (25) und einer radial nach außen verlaufenden Abdeckkappe (27) versehen ist, der Sitzring (25) axial innen einstückig in einen abgewinkelten Schnappring (26) übergeht und der Schnappring (26) radial außen mit einem rundumlaufenden Befestigungsbund (21) versehen ist, der mit der Hinterschneidung (16) in der Kolbenstangenführung (14) in Wirkverbindung bringbar ist.

3. Abschlußanordnung nach Anspruch 2, dadurch gekennzeichnet, daß der Schnappring (26) axial innen mit einer auf den Befestigungsbund (21) zulaufenden Montageschräge (22) versehen ist.

4. Abschlußanordnung nach Anspruch 2 oder 3, dadurch gekennzeichnet, daß der Befestigungsbund (21) mit einem Hinterschneidungswinkel (23) versehen ist, der dem Hinterschneidungswinkel (17) der Hinterschneidung (16) an der Kolbenstangenführung (14) annähernd entspricht.

5. Abschlußanordnung nach den Ansprüchen 2 bis 4, dadurch gekennzeichnet, daß der Schnappring (26) eine radial verlaufende Sitzfläche (24) aufweist, die in Einbaulage an einer Anschlagfläche (19) der Kolbenstangenführung (14) anliegt.

6. Abschlußanordnung nach einem der Ansprüche 1 bis 5, dadurch gekennzeichnet, daß die Schutzkappe (20) die Umbördelung (15) in Einbaulage mit einer pilzförmigen Abdecklippe (28) dichtend überdeckt.

7. Abschlußanordnung nach einem der Ansprüche 1 bis 6, dadurch gekennzeichnet, daß die Schutzkappe (20) radial innen mit einer Dichtlippe (35) zum Zusammenwirken mit der Kolbenstange (12) versehen ist.

8. Abschlußanordnung nach Anspruch 7, dadurch gekennzeichnet, daß die Dichtlippe (35) mit einem Abspreizwinkel (36) dem Behälterrohrinneren (13) zugewandt verläuft.

9. Abschlußanordnung nach einem der Ansprüche 1 bis 8, dadurch gekennzeichnet, daß in der Schutzkappe (20) radial innen die Montagehülse (30) angeordnet ist.

10. Abschlußanordnung nach Anspruch 9, dadurch gekennzeichnet, daß die Montagehülse (30) über eine Solltrennstelle (31) einstückig mit der Schutzkappe verbunden ist.

11. Abschlußanordnung nach einem der Ansprüche 1-9, dadurch gekennzeichnet, daß die Montagehülse (30) aus einem härteren Material als die Schutzkappe (20) besteht.

12. Abschlußanordnung nach einem der Ansprüche 1 bis 11, dadurch gekennzeichnet, daß der Innendurchmesser (33) der Montagehülse (30) um soviel größer als der Außendurchmesser der Kolbenstange (12) ist, daß die Kolbenstange (12) in der Montagehülse (30) frei gleiten kann.

13. Abschlußanordnung nach einem der Ansprüche 1 bis 12, dadurch gekennzeichnet, daß die Montagehülse (30) in Vor-Montageposition in axialer Richtung um einen vorbestimmbaren Überstand (34) über die Schutzkappe (20) übersteht.

## Claims

1. A closure arrangement on the container tube (11) of a container tube-piston rod appliance, particularly of a pneumatic spring, consisting of a container tube (11) in which there is a possibly pressurised medium, and adapted to be retracted into and extended out of the container tube (11), a piston rod (12) which is guided in a piston rod guide (14) and which is possibly sealed outwardly by a piston rod gasket (35), the piston rod guide (14) being supported in its position by a flanging-over (15) of the container tube (11), the flanging-over (15) being covered by a protective cap (20), characterised in that the piston rod guide (14) is provided at its outlet end with a radial back-taper (16) in which the protective cap (20) is fixed and/or in that an annular projection (26) of the protective cap (20) is pressed radially outwardly by a mounting sleeve (30) against an inner peripheral face (16) of a shoulder constructed at the outlet end of the piston rod guide (14).

2. A closure arrangement according to Claim 1, characterised in that the protective cap (20) is provided with an axially extending cylindrical seating ring (25) and a radially outwardly extending cover cap (27), the seating ring (25) merging axially inwardly in one piece into an angled-over snap-action ring (26) which is provided radially outwardly with an encircling fixing shoulder (21) which can be brought into operative connection with the back-taper (16) in the piston rod guide (14).

3. A closure arrangement according to Claim 2, characterised in that the snap-action ring (26) is provided axially inwardly with an oblique mounting surface (22) converging on the fixing shoulder (21).

4. A closure arrangement according to Claim 2 or 3, characterised in that the fixing shoulder (21) is provided with a back-taper angle (23) which corresponds approximately to the back-taper angle (17) of the back-taper (16) on the piston rod guide (14).

5. A closure arrangement according to Claims 2 to 4, characterised in that the snap-action ring (26) has a radially extending seating surface (24) which, in the installed position, bears on an abutment surface (19) on the piston rod guide (14).

6. A closure arrangement according to one of Claims 1 to 5, characterised in that in the installed position, the protective cap (20) has a mushroom-like covering lip (26) which in sealing-tight manner covers the flanging-over (15).

7. A closure arrangement according to one of Claims 1 to 6, characterised in that the protective cap (20) is provided radially inwardly with a sealing lip (35) adapted to cooperate with the piston rod (12).

8. A closure arrangement according to Claim 7, characterised in that the sealing lip (35) extends towards the interior (13) of the container tube with an opened out angle (36).

9. A closure arrangement according to one of Claims 1 to 8, characterised in that the mounting sleeve (30) is disposed radially within the protective cap (20).

10. A closure arrangement according to Claim 9, characterised in that the mounting sleeve (30) is connected in one piece to the protective cap via an easily separated location (31).

11. A closure arrangement according to one of Claims 1 to 9, characterised in that the mounting sleeve (30) consists of a harder material than the protective cap (20).

12. A closure arrangement according to one of Claims 1 to 11, characterised in that the inside diameter (33) of the mounting sleeve (30) is sufficiently greater than the outside diameter of the piston rod (12) that the piston rod (12) is able to slide freely in the mounting sleeve (30).

13. A closure arrangement according to one of Claims 1 to 12, characterised in that in the pre-assembly position, the mounting sleeve (30) projects in a radial direction beyond the protective cap (20) by a predeterminable amount (34).

## Revendications

1. Dispositif d'étanchéité, sur un tube récipient (11) d'un appareil à tige de piston et cylindre, en particulier un ressort pneumatique, composé d'un tube récipient (11), dans lequel se trouve un fluide, le cas échéant sous pression, et une tige de piston (12), pénétrant et sortant vis-à-vis du tube récipient (11) et guidée dans un guidage de tige de piston (35), et le cas échéant isolée de façon étanche de l'extérieur à l'aide d'un joint d'étanchéité à tige de piston (35), le guidage de tige de piston (14) étant maintenu en position à l'aide d'un rebord en rétreint (15) réalisé sur le tube récipient (11) et recouvert d'un capuchon de protection, caractérisé en ce que le guidage de tige de piston (14) est doté, à son extrémité de sortie, d'une contre-dépouille (16), dans laquelle le capuchon de protection (20) est fixé, et/ou en ce qu'un prolongement annulaire (26) du capuchon de protection (20) est pressé, au moyen d'une douille de montage (30), radialement vers l'extérieur, contre une surface périphérique intérieure (16) d'un decrochement réalisé à l'extrémité de sortie du guidage de tige de piston (14),

2. Dispositif d'étanchéité selon la revendication 1, caractérisé en ce que le capuchon de protection (20) est pourvu d'une bague de siège (25) cylindrique, s'étendant axialement, et d'un capuchon de recouvrement (27) s'étendant radialement vers l'extérieur, la bague de siège (25) se transformant radialement, d'une seule pièce, en une bague à déclic (26) pliée et la bague à déclic (26) étant pourvue radialement extérieurement d'une collerette de fixation (21) sur son pourtour, susceptible d'être reliée fonctionnellement à la contre-dépouille (16) réalisée dans le guidage de tige de piston (14).

3. Dispositif d'étanchéité selon la revendication 2, caractérisé en ce que la bague à déclic (26) est pourvue axialement intérieurement d'une pente de montage (22) montant vers la collerette de fixation (21).

4. Dispositif d'étanchéité selon la revendication 2 ou 3, caractérisé en ce que la collerette de fixation (21) est pourvue d'un angle de contre-dépouille (23), correspondant à peu près à l'angle (17) de la contre-dépouille (16) réalisée sur le guidage de tige de piston (14).

5. Dispositif d'étanchéité selon les revendications 2 à 4, caractérisé en ce que la bague à déclic (26) présente une face de siège (24) s'étendant radialement, appuyant en position de montage sur une face de butée (19) du guidage de tige de piston (14).

6. Dispositif d'étanchéité selon l'une des revendications 1 à 5, caractérisé en ce que le capuchon de protection (20) recouvre de façon étanche le rebord (15), en position de montage, avec une lèvre d'étanchéité (28) en forme de champignon.

7. Dispositif d'étanchéité selon l'une des revendications 1 à 6, caractérisé en ce que le capuchon de protection (20) est pourvu radialement intérieurement d'une lèvre d'étanchéité (35) destinée à coopérer avec la tige de piston (12).

8. Dispositif d'étanchéité selon la revendication 7, caractérisé en ce que la lèvre d'étanchéité (35) s'étend tournée vers l'intérieur du tube récipient (13), avec un angle d'écartement (36).

9. Dispositif d'étanchéité selon l'une des revendications 1 à 8, caractérisé en ce que la douille de montage (30) est disposée radialement à l'intérieur du capuchon de protection (20).

10. Dispositif d'étanchéité selon la revendication 9, caractérisé en ce que la douille de montage (30) est reliée d'un seul tenant au capuchon de protection, par l'intermédiaire d'un point destiné à la rupture (31).

11. Dispositif d'étanchéité selon l'une des revendications 1 à 9, caractérisé en ce que la douille de montage (30) est composée d'un matériau plus dur que le capuchon de protection (20).

12. Dispositif d'étanchéité selon l'une des revendications 1 à 11, caractérisé en ce que le diamètre intérieur (33) de la douille de montage (30) est supérieur au diamètre extérieur de la tige de piston (12), d'une valeur permettant un glissement libre de la tige de piston (12) dans la douille de montage (30).

13. Dispositif d'étanchéité selon l'une des revendications 1 à 12, caractérisé en ce que la douille de montage (30) dépasse du capuchon de protection (20), en position de prémontage, en direction axiale, d'une valeur de dépassement (34) pouvant être prédéterminée.
